# EUROPÄISCHE PATENTSCHRIFT

(11) **EP 2 035 876 B1**
(45) Veröffentlichungstag und Bekanntmachung des Hinweises auf die Patenterteilung: **09.03.2011**
(21) Anmeldenummer: 07764594.3
(22) Anmeldetag: 08.06.2007
(51) Int. Cl.: G02B 6/44

(54) **VORRICHTUNG ZUR ABLAGE BZW. HANDHABUNG VON LICHTWELLENLEITERN**
APPARATUS FOR THE STORAGE AND HANDLING OF OPTICAL WAVEGUIDES
DISPOSITIF DE POSE OU DE MANIPULATION DE FIBRES OPTIQUES

(30) Priorität: 08.06.2006 DE 202006009166 U
(43) Veröffentlichungstag der Anmeldung: 18.03.2009
(73) Patentinhaber: CCS Technology, Inc., Wilmington, DE 19803 (US)
(72) Erfinder: IWANEK, Waldemar, 59302 Oelde (DE)
(74) Vertreter: Sturm, Christoph
(86) Internationale Anmeldenummer: PCT/EP2007/005085
(87) Internationale Veröffentlichungsnummer: WO 2007/141033

(56) Entgegenhaltungen:
- DE-U1- 9 107 560
- DE-U1- 29 614 959
- FR-A- 2 725 467
- US-A1- 2003 185 537
- US-A1- 2005 028 947
- US-B1- 6 301 424

## Beschreibung

Die Erfindung betrifft eine Vorrichtung zur Ablage bzw. Handhabung von Lichtwellenleitem gemäß dem Oberbegriff des Anspruchs 1. Des Weiteren betrifft die Erfindung eine Arretiereinrichtung für eine solche Vorrichtung.

Beim Aufbau von Lichtwellenleiterkabel-Netzwerken werden Vorrichtungen zur Ablage bzw. Handhabung von Lichtwellenleitern für die Gewährleistung einer strukturierten Verkabelung benötigt. Eine Anforderung, die an solche Vorrichtungen gestellt wird, ist eine maximale Bestückung derselben bei hoher Packungsdichte und gleichzeitiger geringfügiger mechanischer Beanspruchung der Lichtwellenleiter. Weiterhin müssen die in solchen Vorrichtungen abgelegten Lichtwellenleiter gut zugänglich sein, um zum Beispiel Spleißarbeiten oder Rangierarbeiten sicher ausführen zu können.

Um die oben genannten Anforderungen zu erfüllen, ist es aus dem Stand der Technik bereits bekannt, bei einer Vorrichtung zur Ablage bzw. Handhabung von Lichtwellenleitern mehrere Baugruppen zum Verbinden und/oder Ablegen der Lichtwellenleiter, zum Beispiel Steckverbinder oder Spleißkassetten, auf einer gemeinsamen Aufnahme anzuordnen, die von einem Gehäuse umgeben ist. Die auf der Aufnahme positionierten Baugruppen sind zusammen mit der Aufnahme zumindest teilweise aus dem Gehäuse insbesondere durch Herausklappen oder durch Herausschwenken heraus bewegbar. Nach dem Herausschwenken der Aufnahme sowie der auf der Aufnahme positionierten Baugruppen aus dem Gehäuse ist es von Bedeutung, die Aufnahme in der aus dem Gehäuse herausgeschwenkten Position gegenüber dem Gehäuse zu arretieren, wobei hierzu eine Arretiereinrichtung dient. Nach Arretierung können Spleißarbeiten oder Rangierarbeiten sicher ausgeführt werden.

Bei aus der Praxis bekannten Vorrichtungen zur Ablage bzw. Handhabung von Lichtwellenleitern kommen als Arretiereinrichtungen Federdruckstifte zum Einsatz, wobei mit Hilfe solcher Federdruckstifte jedoch nur eine ungenügende Verriegelung und damit Arretierung der Aufnahme relativ zum Gehäuse erzielt werden kann. Andere aus der Praxis bekannte Arretiereinrichtungen sind aufgrund der engen räumlichen Gegebenheiten an Vorrichtungen zur Ablage bzw. Handhabung von Lichtwellenleitern nicht verwendbar.

Aus der DE 296 14 959 U1 sowie aus der US 2003/0185537 A1 sind jeweils Vorrichtungen gemäß dem Oberbegriff des Patentanspruchs 1 bekannt.

Aus der US 2005/0028947 A1 sowie aus der DE 91 07 560 U1 sind jeweils als Kipphebel ausgebildete Arretiereinrichtungen bekannt.

Hiervon ausgehend liegt der vorliegenden Erfindung das Problem zu Grunde, eine neuartige Vorrichtung zur Ablage bzw. Handhabung von Lichtwellenleitern sowie eine Arretiereinrichtung für eine solche Vorrichtung zu schaffen. Dieses Problem wird dadurch gelöst, dass die eingangs genannte Vorrichtung durch die Merkmale des kennzeichnenden Teils des Anspruchs 1 weitergebildet ist.

Die erfindungsgemäße Vorrichtung zur Ablage bzw. Handhabung von Lichtwellenleitern verfügt über eine Arretiereinrichtung, mit der einerseits die Aufnahme der erfindungsgemäßen Vorrichtung relativ zum Gehäuse derselben sicher und selbsttätig verriegelbar ist, und mit der andererseits eine einfache manuelle Entriegelung der Aufnahme relativ zum Gehäuse realisierbar ist.

Die Arretiereinrichtung benötigt so gut wie keinen zusätzlichen Bauraum, so dass dieselben ohne konstruktive Änderung der Vorrichtung zur Ablage bzw. Handhangung von Lichtwellenleitern in dieselbe integriert werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: einen Ausschnitt aus einer erfindungsgemäßen Vorrichtung zur Abla- ge bzw. Handhabung von Lichtwellenleitern mit einer Arretiereinrich- tung In perspektivischer Anslcht;
- Fig. 2:: einen Querschnitt durch die erfindungsgemäße Vorrichtung der Fig. 1 mit der Arretiereinrichtung in Verriegelungsposition;
- Fig. 3:: einen Querschnitt durch die erfindungsgemäße Vorrichtung der Fig. 1 mit der Arretiereinrichtung In Entriegelungsposition; und
- Fig. 4:: die Arretiereinrichtung der erfindungsgemäßen Vorrichtung in Allein- darstellung.

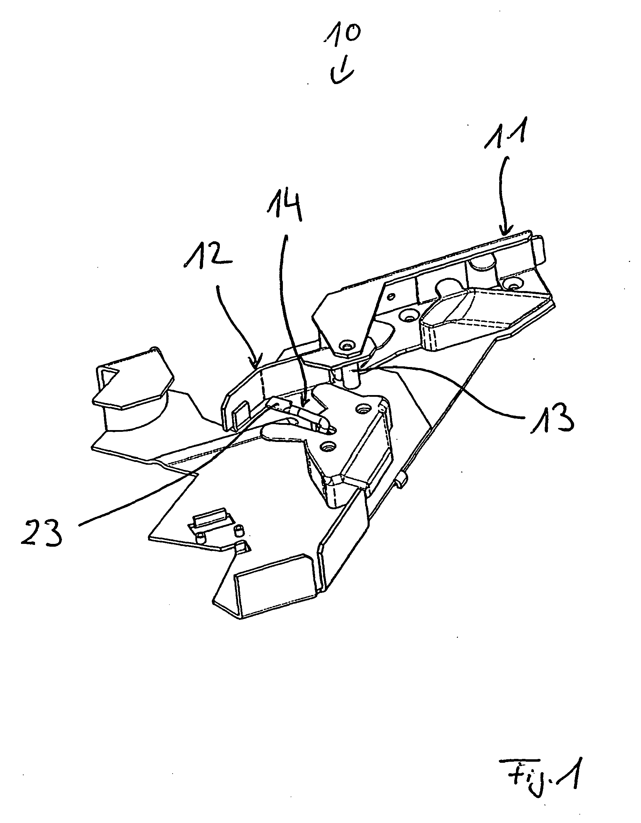

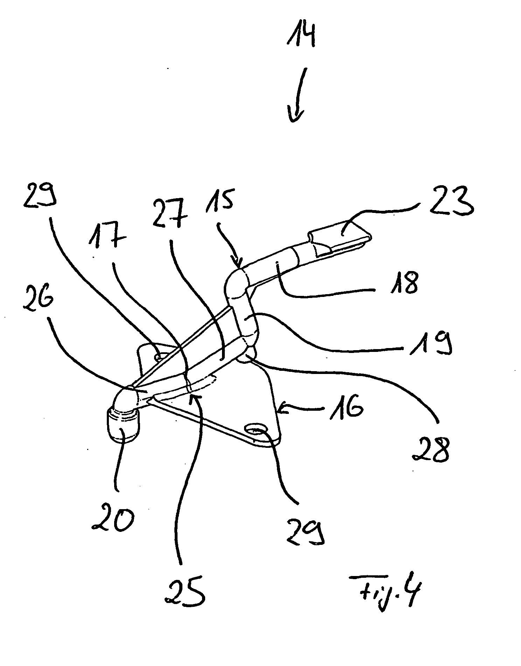

Nachfolgend wird die hier vorliegende Erfindung unter Bezugnahme auf Fig. 1 bis 4 im größeren Detail beschrieben, wobei Fig. 1 bis 3 einen Ausschnitt aus einer erfindungsgemäßen Vorrichtung zur Ablage bzw. Handhabung von Lichtwellenleitern zusammen mit einer Arretiereinrichtung und Fig. 4 die Arretiereinrichtung in Alleindarstellung zeigen.

Fig. 1 bis 3 zeigen einen Ausschnitt aus einer erfindungsgemäßen Vorrichtung 10 zur Ablage bzw. Handhabung von Lichtwellenleitern, die im gezeigten Ausführungsbeispiel als Verteilerfeld ausgebildet ist.

Die Vorrichtung 10 verfügt über ein Gehäuse 11 sowie eine Aufnahme 12, wobei die Aufnahme 12 am Gehäuse 11 drehbar bzw. schwenkbar gelagert ist. Gemäß Fig. 1 ist die Aufnahme 12 gegenüber dem Gehäuse 11 um eine Drehachse 13 drehbar bzw. schwenkbar, um so die Aufnahme, 12 entweder in das Gehäuse 11 hineinzuschwenken oder aus demselben herauszuschwenken. Die Fig. 1 zeigt die Aufnahme 12 in einer aus dem Gehäuse 11 herausgeschwenkten Position.

In der Aufnahme 12 sind üblicherweise Baugruppen aufgenommen, die dem Verbinden und/oder Ablegen von Lichtwellenleitern dienen. Bei diesen Baugruppen handelt es sich insbesondere um Spleißkassetten, wobei die Aufnahme 12 dann als Spleißkassettenhalter dient. Weiterhin kann es sich bei diesen Baugruppen um Steckverbinder handeln. Vorzugsweise sind Spleißkassetten und Steckverbinder gemeinsam auf der Aufnahme 12 positioniert.

Über das Gehäuse 11 ist die Vorrichtung 10 z. B. in einem Verteilerschrank bzw. an einem Verteilerrahmen montierbar. Dann, wenn wie Fig. 1 zeigt, die Aufnahme 12 aus dem Gehäuse 11 herausgeschwenkt ist, ist der Zugriff auf die in der Aufnahme 12 aufgenommenen Baugruppen, die dem Verbinden und/oder Ablegen von Lichtwellenleitern dienen, bzw. der Zugriff auf die Lichtwellenleiter erleichtert.

Die Aufnahme 12 ist gegenüber dem Gehäuse 11 zumindest in der in Fig. 1 bis 3 gezeigten, zumindest teilweise aus dem Gehäuse 11 herausgeschwenkten Position, gegenüber dem Gehäuse 11 durch eine Arretiereinrichtung 14 arretierbar. Vorzugsweise ist die Aufnahme 12 auch in einer in das Gehäuse 11 hineingeschwenkten Position durch die Arretiereinrichtung 14 gegenüber dem Gehäuse 11 der Vorrichtung 10 arretierbar.

Die Arretiereinrichtung 14 umfasst ein Arretierelement 15 sowie ein Halteelement 16, wobei das Arretierelement 15 und das Halteelement 16 als monolithisches Spritzgussteil aus Kunststoff ausgebildet sind.

Das Arretierelement 15 der Arretiereinrichtung 14 verfügt über einen Arretierabschnitt 17, einen Betätigungsabschnitt 18 und einen Verbindungsabschnitt 19. Der Arretierabschnitt 17 sowie der Betätigungsabschnitt 1.8 sind über den Verbindungsabschnitt 19 miteinander verbunden, und zwar derart, dass der Betätigungsabschnitt 18 und der Arretierabschnitt 17 an sich gegenüberliegenden Enden des Verbindungsabschnitts 19 an demselben angreifen und in unterschiedlichen Richtungen vom Verbindungsabschnitt 19 vorstehen. So verlaufen sowohl der Betätigungsabschnitt 18 und der Verbindungsabschnitt 19 als auch der Arretierabschnitt 17 und der Verbindungsabschnitt 19 in etwa rechtwinklig zueinander, so dass das Arretierelement 15 der Arretiereinrichtung 14 im Wesentlichen S-förmig konturiert ist.

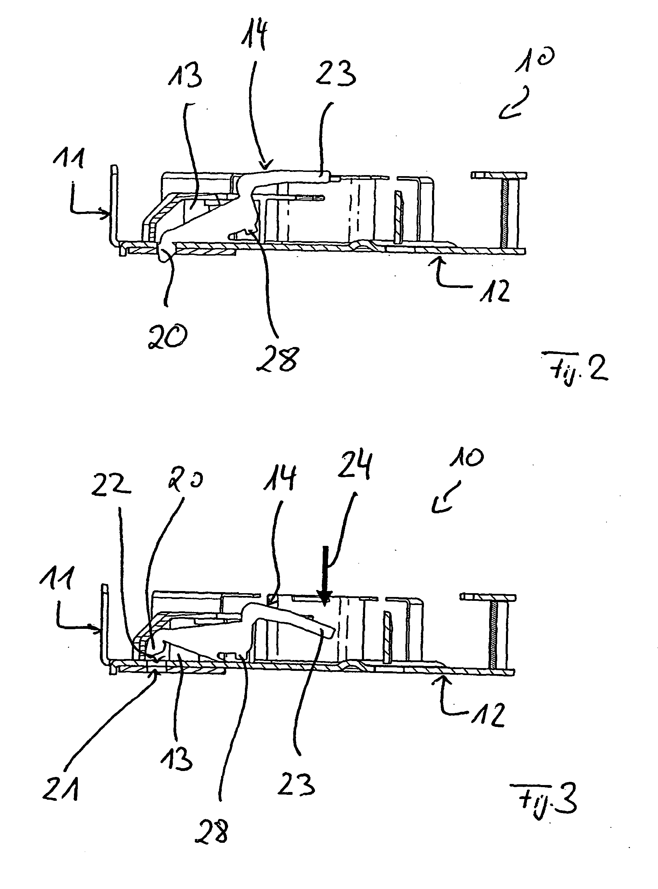

Das Halteelement 16 der Arretiereinrichtung 14 greift am Arretierabschnitt 17 des Arretierelements 15 an, wobei das Halteelement 16 der Befestigung der Arretiereinrichtung 14 an der Aufnahme 11 der Vorrichtung zur Ablage bzw. Handhabung von Lichtwellenleitern dient. Der Arretierabschnitt 17 trägt an einem dem Verbindungsabschnitt 19 gegenüberliegenden Ende einen Arretierbolzen 20, der zur Verriegelung der Aufnahme 12 relativ zum Gehäuse 11 Ausnehmungen 21 und 22 durchdringt, die in das Gehäuse 11 sowie in die Aufnahme 12 eingebracht sind. Fig. 2 zeigt den Arretierbolzen 20 der Arretiereinrichtung 14, in welcher derselbe die beiden Ausnehmungen 21 und 22 des Gehäuses 11 und der Aufnahme 22 durchdringt.

Der Betätigungsabschnitt 18 bildet an einem dem Verbindungsabschnitt 19 gegenüberliegenden Ende einen Betätigungsgriff 23, wobei zur Entriegelung der Aufnahme 12 relativ zum Gehäuse 11 gemäß Fig. 3 in Richtung des Pfeils 24 eine Kraft auf den Betätigungsgriff 23 und damit den Betätigungsabschnitt 18 der Arretiereinrichtung 14 aufgebracht werden kann, um den Arretierbolzen 20 aus den Ausnehmungen 21 und 22 von Gehäuse 11 sowie Aufnahme 12 herauszubewegen.

Hierzu ist das Arretierelement 15 der Arretiereinrichtung 14 gegenüber dem Halteelement 16 derselben federelastisch verschwenkbar, und zwar um einen Verbindungsbereich 25 zwischen dem Arretierabschnitt 17 des Arretierelements 15 und dem Halteelement 16 der Arretiereinrichtung 14. Diese Schwenkbewegung des Arretierelements 15 relativ zum Halteelement 16 ist federelastisch, so dass demnach die Arretiereinrichtung 14 selbsttätig von der in Fig. 3 gezeigten Position in die in Fig. 2 gezeigte Position zurückkehrt.

Wie am besten Fig. 4 entnommen werden kann, wird der Arretierabschnitt 17 des Arretierelements 15 der Arretiereinrichtung 14 von zwei zueinander abgewinkelten Segmenten 26 und 27 gebildet. An einem ersten Segment 26 ist der Arretierbolzen 20 ausgebildet. Ein zweites Segment 27 dient der Anbindung des Arretierabschnitts 17 an den Verbindungsabschnitt 19 des Arretierelements 15. In einem Übergangsbereich zwischen den beiden Segmenten 26 und 27 des Arretierabschnitts 17 greift das Halteelement 16 der Arretiereinrichtung 14 an.

Das Halteelement 16 sowie das zweite Segment 27 des Arretierabschnitts 17 des Arretierelements 14 sind in einem sich an den Verbindungsabschnitt 19 anschließenden Abschnitt bzw. Bereich nicht miteinander verbunden und schließen einen relativ spitzen Winkel in einer Größenordnung von vorzugsweise zwischen 5° und 20° ein. Hierdurch ist gewährleistet, dass bei Aufbringen einer definierten Kraft in Richtung des Pfeils 24 auf den Betätigungsgriff 23 des Arretierelements 15 der Arretiereinrichtung 14 dasselbe relativ zum Halteelement 16 der Arretiereinrichtung 14 verschwenkt werden kann. Ein Vorsprung 28 des zweiten Segments 27 des Arretierabschnitts 17 bzw. des Verbindungsabschnitts 19 bildet dabei einen Anschlag, welcher die Schwenkbewegung des Arretierelements 15 relativ zum Halteelement 16 begrenzt.

Das Halteelement 16.verfügt über Ausnehmungen 29, durch die sich zur Befestigung der Arretiereinrichtung 14 an der Aufnahme 12 nicht gezeigte Befestigungseinrichtungen erstrecken.

Die Arretiereinrichtung 14 der Fig. 4 lässt sich gemäß Fig. 1 bis 3 einfach in eine Vorrichtung zur Ablage bzw. Handhabung von Lichtwellenleitern integrieren. Dieselbe benötigt dabei so gut wie keinen zusätzlichen Bauraum in der Vorrichtung 10. Über den Betätigungsgriff 23 des Betätigungsabschnitts 18 ist die Arretiereinrichtung 14 manuell entriegelbar, so dass die Aufnahme 12 relativ zum Gehäuse 11 der Vorrichtung 10 verschwenkt werden kann.

Dann, wenn die Ausnehmungen 20 und 21 von Aufnahme 12 und Gehäuse 10 deckungsgleich sind, rastet der Arretierbolzen 20 des Arretierelements 15 der Arretiereinrichtung 14 selbsttätig in die Ausnehmungen 21 und 22 zur Verriegelung der Aufnahme 12 relativ zum Gehäuse 11 ein. Dies erfolgt vorzugsweise in zwei Relativpositionen der Aufnahme 12 relativ zum Gehäuse 11, nämlich erstens in einer Position, in welcher die Aufnahme 12 aus dem Gehäuse 11 herausgeschwenkt ist, und zweitens in einer Position, in welcher die Aufnahme 12 in das Gehäuse 11 hineingeschwenkt ist. Hierzu müssen dann in das Gehäuse 11 zwei Ausnehmungen 21 integriert sein, in welche der Arretierbolzen 20 selbsttätig einrastet, wenn die jeweilige Ausnehmung 21 der Aufnahme 11 deckungsgleich mit der Ausnehmung 22 der Aufnahme 12 ist.

Wie bereits erwähnt, handelt es sich bei der erfindungsgemäßen Vorrichtung 10 vorzugsweise um ein Verteilerfeld für Lichtwellenleiter, wobei auf der Aufnahme 12 Baugruppen wie Spleißkassetten und/oder Steckverbinder, die dem Verbinden und/oder Ablegen von Lichtwellenleitern dienen, positioniert sind, und wobei die Vorrichtung 10 über das Gehäuse 11 an einem Verteilerschrank bzw. an einem Verteilerrahmen befestigt ist. Dann, wenn die Aufnahme 12 aus dem Gehäuse 11 herausgeschwenkt ist, ist dieselbe auch aus dem Verteilerschrank bzw. dem Verteilerrahmen herausgeschwenkt, sodass die Baugruppen, die dem Verbinden und/oder Ablegen von Lichtwellenleitern dienen, bzw. die Lichtwellenleiter gut zugänglich sind.

### Bezugszeichenliste

- 10: Vorrichtung
- 11: Gehäuse
- 12: Aufnahme
- 13: Drehachse
- 14: Arretiereinrichtung
- 15: Arretierelement
- 16: Halteelement
- 17: Arretierabschnitt
- 18: Betätigungsabschnitt
- 19: Verbindungsabschnitt
- 20: Arretierbolzen
- 21: Ausnehmung
- 22: Ausnehmung
- 23: Betätigungsgriff
- 24: Pfeil
- 25: Verbindungsbereich
- 26: Segment
- 27: Segment
- 28: Vorsprung
- 29: Ausnehmung

## Patentansprüche

1. Vorrichtung zur Ablage bzw. Handhabung von Lichtwellenleitern bzw. von in mindestens einem Kabel verlaufenden Lichtwellenleitern, mit einem Gehäuse (11) und einer in dem Gehäuse (11) gelagerten Aufnahme (12), die Baugruppen zum Verbinden und/oder Ablegen der Lichtwellenleiter bzw. der in dem oder jedem Kabel verlaufenden Lichtwellenleiter aufnimmt, wobei die Aufnahme (12) für einen erleichterten Zugriff auf die Baugruppen, die dem Verbinden und/oder Ablegen der Lichtwellenleiter bzw. der in den Kabeln verlaufenden Lichtwellenleiter dienen, zumindest teilweise aus dem Gehäuse (11) heraus schwenkbar ist, und wobei die Aufnahme (12) zumindest in einer aus dem Gehäuse (11) herausgeschwenkten Position gegenüber dem Gehäuse (11) durch eine Arretiereinrichtung (14), die Bestandteil der Vorrichtung ist, arretierbar ist, **dadurch gekennzeichnet, dass** die Arretiereinrichtung (14) ein Arretierelement (15) und ein Halteelement (16) umfasst, wobei die Arretiereinrichtung (14) über das Halteelement (16) derselben an der im Gehäuse (11) gelagerten Aufnahme (12) befestigt ist, wobei das Arretierelement (15) einen Betätigungsabschnitt (18) und einen Arretierabschnitt (17) aufweist, die über einen Verbindungsabschnitt (19) derart miteinander verbunden sind, dass der Betätigungsabschnitt (18) und der Arretierabschnitt (17) an sich gegenüberliegenden Enden des Verbindungsabschnitts (19) an demselben angreifen und vom Verbindungsabschnitt (19) in unterschiedlichen Richtungen in etwa rechtwinklig vorstehen, wobei der Arretierabschnitt (17) des Arretierelements (15) von zwei zueinander abgewinkelten Segmenten (26, 27) gebildet ist, wobei an einem ersten Segment (27) des Arretierabschnitts (17) gegenüberliegend zum Verbindungsabschnitt (19) ein Arretierbolzen (20) ausgebildet, der zur Arretierung der Aufnahme (12) gegenüber dem Gehäuse (11) in eine Ausnehmung (22) der Aufnahme (12) und eine Ausnehmung (21) des Gehäuses (11) hineinragt, wobei an einem zweiten Segment (27) des Arretierabschnitts (17) der Verbindungsabschnitt (19) des Arretierelements (15) angreift, und wobei das Halteelement (16) der Arretiereinrichtung (14) an einem in einem Übergangsbereich zwischen den beiden Segmenten (26, 27) positionierten Verbindungsbereich (25) derart am Arretierabschnitt (17) angreift, dass das zweite Segment (27) des Arretierabschnitts (17) und das Haltelement (16) an einem sich an den Verbindungsabschnitt (19) anschließenden Bereich nicht miteinander verbunden sind und das Arretierelement (15) gegenüber dem Halteelement (16) um den Verbindungsbereich (25) zwischen dem Arretierabschnitt (17) des Arretierelements (15) und dem Halteelement (16) bei Aufbringen einer definierten Kraft auf den Betätigungsabschnitt (18) derart federelastisch schwenkbar ist, dass durch Aufbringen der Kraft auf den Betätigungsabschnitt (18) der Arretierbolzen (20) aus der Ausnehmung (22) der Aufnahme (12) und der Ausnehmung (21) des Gehäuses (11) heraus bewegbar ist.

2. Vorrichtung nach Anspruch 1, **dadurch gekennzeichnet, dass** der Betätigungsabschnitt (18) an einem dem Verbindungsabschnitt (19) gegenüberliegenden Ende einen Betätigungsgriff (23) zum Aufbringen der definierten Kraft bildet.

3. Vorrichtung nach Anspruch 1 oder 2, **dadurch gekennzeichnet, dass** das Arretierelement (15) und das Halteelement (16) der Arretiereinrichtung (14) als monolithisches Spritzgussteil aus Kunststoff ausgebildet sind.

4. Vorrichtung nach einem oder mehreren der Ansprüche 1 bis 3, **dadurch gekennzeichnet, dass** das zweite Segment (27) des Arretierelements (15) und das Halteelement (16) einen relativ spitzen Winkel zwischen 5° und 20° einschließen.

## Claims

1. Apparatus for storing or handling optical waveguides or optical waveguides running in at least one cable, with a housing (11) and a receptacle (12), which is mounted in the housing (11) and receives assemblies for connecting and/or storing the optical waveguides or the optical waveguides running in the or each cable, it being possible for the receptacle (12) to be pivoted at least partially out of the housing (11) to facilitate access to the assemblies used for connecting and/or storing the optical waveguides or the optical waveguides running in the cables, and it being possible for the receptacle (12) to be locked at least in a position in which it is pivoted out of the housing (11) with respect to the housing (11) by a locking device (14), which is part of the apparatus, **characterized in that** the locking device (14) comprises a locking element (15) and a holding element (16), the locking device (14) being fastened to the receptacle (12), which is mounted in the housing (11), via the holding element (16) of said locking device, the locking element (15) having an actuating section (18) and a locking section (17), which are connected to one another via a connecting section (19) in such a way that the actuating section (18) and the locking section (17) act on the connecting section (19) at opposite ends thereof and protrude from the connecting section (19) in different directions approximately at right angles, the locking section (17) of the locking element (15) being formed by two segments (26, 27), which are angled with respect to one another, a locking bolt (20) being formed on a first segment (27) of the locking section (17) opposite the connecting section (19) and protruding into a cutout (22) in the receptacle (12) and a cutout (21) in the housing (11) so as to lock the receptacle (12) with respect to the housing (11), the connecting section (19) of the locking element (15) acting on a second segment (27) of the locking section (17), and the holding element (16) of the locking device (14) acting on the locking section (17) at a connecting region (25) positioned in a transition region between the two segments (26, 27) in such a way that the second segment (27) of the locking section (17) and the holding element (16) are not connected to one another in a region adjoining the connecting section (19), and it being possible for the locking element (15) to be pivoted in spring-elastic fashion with respect to the holding element (16) around the connecting region (25) between the locking section (17) of the locking element (15) and the holding element (16) when a defined force is applied to the actuating section (18), in such a way that, by applying the force to the actuating section (18), it is possible for the locking bolt (20) to be moved out of the cutout (22) in the receptacle (12) and out of the cutout (21) in the housing (11).

2. Apparatus according to Claim 1, **characterized in that** the actuating section (18) forms an actuating handle (23) for applying the defined force at an end which is opposite the connecting section (19).

3. Apparatus according to Claim 1 or 2, **characterized in that** the locking element (15) and the holding element (16) of the locking device (14) are in the form of a monolithic injection-moulded part consisting of plastic.

4. Apparatus according to one or more of Claims 1 to 3, **characterized in that** the second segment (27) of the locking element (15) and the holding element (16) enclose a relatively acute angle of between 5° and 20°.

## Revendications

1. Dispositif de pose ou de manipulation de conducteurs d'ondes lumineuses ou de conducteurs d'ondes lumineuses qui s'étendent dans au moins un câble, doté :
d'un boîtier (11) et
d'un logement (12) qui est monté dans le boîtier (11) et qui loge les modules de liaison et/ou de pose des conducteurs d'ondes lumineuses ou des conducteurs d'ondes lumineuses s'étendant dans le ou les câbles,
le logement (12) pouvant pivoter au moins en partie hors du boîtier (11) pour permettre l'accès aux modules qui servent à relier et/ou à poser les conducteurs d'ondes lumineuses ou les conducteurs d'ondes lumineuses qui s'étendent dans les câbles,
le logement (12) pouvant être bloqué par rapport au boîtier (11) dans une position pivotée hors du boîtier (11) par un dispositif de blocage (14) qui fait partie du dispositif,
**caractérisé en ce que**
le dispositif de blocage (14) comporte un élément de blocage (15) et un élément de retenue (16),
**en ce que** le dispositif de blocage (14) est fixé par son élément de retenue (16) sur le logement (12) monté dans le boîtier (11),
**en ce que** l'élément de blocage (15) présente une partie d'actionnement (18) et une partie de blocage (17) qui sont reliées l'une à l'autre par une partie de liaison (19) de telle sorte que la partie d'actionnement (18) et la partie de blocage (17) engagent la partie de liaison (19) sur les extrémités opposées de cette dernière et débordent sensiblement à angle droit de la partie de liaison (19) dans des directions différentes,
**en ce que** la partie de blocage (17) de l'élément de blocage (15) est formée de deux segments (26, 27) coudés l'un par rapport à l'autre,
**en ce que** sur un premier segment (27) de la partie de blocage (17) situé face à la partie de liaison (19) est formé un goujon de blocage (20) qui déborde du boîtier (11) dans une découpe (22) du logement (12) et une découpe (21) du boîtier (11) pour bloquer le logement (12),
**en ce que** la partie de liaison (19) de l'élément de blocage (15) engage un deuxième segment (27) de la partie de blocage (17) et
**en ce que** l'élément de retenue (16) du dispositif de blocage (14) engage la partie de blocage (17) sur une zone de liaison (25) placée dans une partie qui assure la transition entre les deux segments (26, 27), de telle sorte que le deuxième segment (27) de la partie de blocage (17) et que l'élément de retenue (16) sont reliés l'un à l'autre sur la zone qui se raccorde à la partie de liaison (19) et que l'élément de blocage (15) peut pivoter élastiquement par rapport à l'élément de retenue (16) autour de la zone de liaison (25) entre la partie de blocage (17) de l'élément de blocage (15) et l'élément de retenue (16) lorsqu'une force définie est appliquée sur la partie d'actionnement (18), de telle sorte que par l'application d'une force sur la partie d'actionnement (18), le goujon de blocage (20) peut être déplacé hors de la découpe (22) du logement (12) et de la découpe (21) du boîtier (11).

2. Dispositif selon la revendication 1, **caractérisé en ce que** sur une extrémité opposée à la partie de liaison (19), la partie d'actionnement (18) forme une poignée d'actionnement (23) qui permet d'appliquer la force définie.

3. Dispositif selon les revendications 1 ou 2, **caractérisé en ce que** l'élément de blocage (15) et l'élément de retenue (16) du dispositif de blocage (14) sont configurés comme pièces monolithiques en matière synthétique moulée par injection.

4. Dispositif selon l'une ou plusieurs des revendications 1 à 3, **caractérisé en ce que** le deuxième segment (27) de l'élément de blocage (15) et l'élément de retenue (16) forment entre eux un angle aigu compris entre 5° et 20°.
